# EUROPÄISCHE PATENTSCHRIFT

(11) **EP 3 945 292 B1**
(45) Veröffentlichungstag und Bekanntmachung des Hinweises auf die Patenterteilung: **12.07.2023**
(21) Anmeldenummer: 20188382.4
(22) Anmeldetag: 29.07.2020
(51) Int. Cl.: G01D 11/24, G01D 13/00, G01K 1/08, G01L 19/14

(54) **MESSANORDNUNG MIT EINEM IN EINEM GEHÄUSEINNENRAUM ANGEORDNETEN SENSOR**
MEASUREMENT ASSEMBLY WITH A SENSOR WITHIN A HOUSING
DISPOSITIF DE MESURE AVEC UN CAPTEUR DISPOSÉ À L'INTÉRIEUR D'UN BOITIER

(43) Veröffentlichungstag der Anmeldung: 02.02.2022
(73) Patentinhaber: MP-Sensor GmbH, 73765 Neuhausen (DE)
(72) Erfinder: Ulrich, Thomas, 71549 Auenwald (DE)
(74) Vertreter: Wasmuth, Rolf

(56) Entgegenhaltungen:
- EP-A1- 0 949 484
- CN-U- 210 128 766
- DE-A1-102007 004 825
- DE-A1-102007 004 828
- DE-A1-102012 201 018

## Beschreibung

Die Erfindung betrifft eine Messanordnung mit einem Gehäuse und zumindest einen im Gehäuseinnenraum angeordneten Sensor sowie einer Sensorelektronik, wobei das Gehäuse einen Messeingang und einen Signalausgang aufweist, und mit einem am Gehäuse gehaltenen Display. Das Gehäuse ist aus einem Rohrabschnitt mit einer Längsmittelachse und einem maximalen Außendurchmesser gebildet, wobei die offenen Enden des Rohrabschnittes durch je einen Verschlussstopfen verschlossen sind. In der Rohrwandung des Rohrabschnittes ist eine zum Gehäuseinnenraum offene Aufnahme für das Display eingebracht.

Derartige aus der DE 10 2007 004 825 A1 oder der DE 10 2012 201 018 A1 Messanordnungen erfassen z. B. die mechanische Messgröße Druck und geben zum Beispiel bei Erreichen eines einstellbaren Schwellwertes ein elektrisches Signal ab. Die Messanordnungen sind mit einem Gehäuse versehen, welches einen Messeingang für den Druck und einen Signalausgang für das elektrische Signal aufweisen. Die Gehäuse weisen zur Einstellung von Parametern Drucktasten, Stellräder oder dergleichen elektrische oder mechanische Stellelemente und auch ein Display auf. Da die Messanordnungen unter Betriebsbedingungen Staub, Schmutz und Feuchtigkeit ausgesetzt sind, müssen die Gehäuse und die Stellelemente entsprechend abgedichtet sein. Dies führt zu einem erheblichen Aufwand bei der Herstellung derartiger Messanordnungen mit in einem Gehäuse angeordnetem Sensor, einer Sensorelektronik und dergleichen.

Der Erfindung liegt die Aufgabe zugrunde, eine konstruktiv einfache Messanordnung mit in einem Gehäuseinnenraum angeordnetem Sensor und einer Sensorelektronik derart auszubilden, dass sie einfach herstellbar und mit geringem Aufwand gegen Staub und Feuchtigkeit abgedichtet werden kann. Darüber hinaus soll eine einfache Einstellung von Parametern der Messanordnung möglich sein.

Die Aufgabe wird erfindungsgemäß nach den Merkmalen des Anspruchs 1 gelöst. In der Rohrwandung ist eine Aufnahme eingebracht, in der das Display der Messanordnung aufgenommen ist. Hierzu weist die Aufnahme über ihren Innenumfang zumindest teilweise einen Auflagerand auf, der in die Aufnahme einragt und eine Auflage für das Display bildet. Das Display ist ein Touch Display und als Scrollrad zur Einstellung von Schaltparametern der Messanordnung ausgebildet.

Das Gehäuse der Messanordnung ist ein Rohrabschnitt, der in einer vorgegebenen Länge von einem Rohr beliebiger Länge abgelängt ist. Als Ausgangsmaterial für das Gehäuse der Messanordnung ist somit ein einfaches Rohr verwendet, welches aus Stahl, Aluminium, Kunststoff oder dergleichen Rohrmaterial bestehen kann. Die Art der Rohrherstellung kann beliebig sein. Der Rohrabschnitt für das Gehäuse der Messanordnung kann von einem längsverschweißten Rohr, einem gewalzten Rohr, einem gezogenen Rohr oder dergleichen hergestellten Rohr abgelängt werden. Damit entfallen gesonderte Kosten für die Herstellung eines Gehäuses. Der abgelängte Rohrabschnitt muss lediglich mit einer Aufnahme für das Display versehen und an den offenen Enden verschlossen werden.

Die in der Rohrwandung vorgesehene Aufnahme für das Display ist zum Gehäuseinnenraum offen, so dass alle elektrischen Leitungsverbindungen von der Sensorelektronik in einfacher Weise an das Display angeschlossen werden können.

Das Touch Display der Messanordnung ist nicht nur als Anzeige für Messwerte, Parameter oder dergleichen vorgesehen, sondern ist gleichzeitig ein Eingabeelement zum Eingeben von Stellwerten, Parametern oder dergleichen in die Messanordnung. Das Display als Scrollrad ausgebildet, um durch Scrollen der in der Anzeige wiedergegebenen Zahlen die einzustellenden Parameter zu wählen. Erfindungsgemäß sind somit keine Tasten, Schalter oder mechanische Stellelemente zur Wahl von vorzugebenden Parametern notwendig.

Der in die Aufnahme einragende Auflagerand ist einteiliges Material des Rohrabschnittes und liegt in einer Ebene, die parallel zur Längsmittelachse des Rohrabschnittes ausgerichtet ist.

Darüber hinaus bildet die durch den Auflagerand bestimmte Ebene im Querschnitt des Rohrabschnittes eine Sekante zu dem Kreis des maximalen Außendurchmessers des Rohrabschnittes selbst. Die Anordnung ist so getroffen, dass das auf dem Auflagerand aufliegende Display innerhalb des maximalen Außendurchmessers des Rohrabschnittes liegt. Dadurch ist das Display gegen mechanische Einwirkungen weitgehend geschützt.

In besonderer Ausgestaltung der Erfindung erstreckt sich der Auflagerand über den gesamten Innenumfang der Ausnehmung. Dadurch wird eine flächige Auflage des Displays auf dem Auflagerand erzielt mit der Wirkung, dass das Display als "Verschlussdeckel" die Ausnehmung in der Rohrwandung verschließt.

Das Display ist in Weiterbildung der Erfindung auf dem Auflagerand der Aufnahme staub- und flüssigkeitsdicht verklebt. Dadurch kann die Messanordnung eine IP-Schutzklasse bis zu IP65 oder IP67 erreichen.

In Weiterbildung der Erfindung ist vorgesehen, den Messeingang auf der einen Stirnseite des Rohrabschnittes vorzusehen und den Signalausgang auf der anderen Stirnseite des Rohrabschnittes anzuordnen. Dadurch kann eine einfache Montage des Messeingangs an ein Rohr und ein leichter Anschluss eines elektrischen Signalkabels an den Signalausgang erzielt werden.

Zur Bereitstellung des Messeingangs sowie zur Bereitstellung des Signalausgangs ist in einfacher Weise vorgesehen, den Messeingang und/oder den Signalausgang in dem Stopfen anzuordnen, der zum Verschließen des Gehäuses in das offene Ende des Rohrabschnittes dichtend eingesetzt ist. Da der gehäusebildende Rohrabschnitt stirnseitig offen ist, ist ein einfacher, insbesondere zweiseitiger Zugang zu dem Gehäuseinnenraum gegeben. Dies gewährleistet eine einfache Montage. Darüber hinaus kann der Messeingang getrennt von dem Rohrabschnitt an dem an dem Verschlussstopfen montiert werden, wobei der Verschlussstopfen für die Montage von Bauelementen über 360° zugänglich ist.

So kann ein Verschlussstopfen als Halter für die Platine der Sensorelektronik ausgebildet werden und die Platine zusammen mit dem Verschlussstopfen über das offene Ende des Rohrabschnittes in den Gehäuseinnenraum axial eingeschoben werden. Bevorzugt ist im Gehäuseinnenraum ergänzend eine Trägerstruktur für die Platine vorgesehen, die über eine offene Stirnseite des Rohrabschnittes leicht eingeschoben werden kann.

In besonderer Weiterbildung der Erfindung wird ein Verschlussstopfen als Träger für den Sensor ausgebildet. An diesem Verschlussstopfen kann zugleich der Messanschluss ausgebildet sein. Auch dieser Verschlussstopfen mit dem Messanschluss ist vor der Montage an dem gehäusebildenden Rohrabschnitt allseitig zugänglich, so dass der Sensor in einfacher Weise in dem Verschlussstopfen montiert werden kann. Der Messanschluss kann in vielfältiger Weise ausgebildet sein. Zum Beispiel kann der Messanschluss als Temperaturfühler bzw. Temperatursensor ausgebildet sein, der in ein Fluid ragt. Bevorzugt ist in dem Verschlussstopfen eine mit einem Fluid gefüllte Messkammer ausgebildet, die über einen Fluidkanal mit dem Messeingang für ein flüssiges oder gasförmiges Medium verbunden ist.

In besonderer Ausgestaltung der Erfindung ist der Verschlussstopfen mit dem Messanschluss in dem offenen Ende des Rohrabschnittes um die Linksmittelachse des Rohrabschnittes drehbar gehalten. Dadurch wird gewährleistet, dass bei einem Anschrauben des Messanschlusses an eine Rohrleitung der zu drehende Messanschluss sich relativ zum Gehäuse drehen kann. Unabhängig von der Drehlage des Messanschlusses an der Rohrleitung kann das Gehäuse um die Längsmittelachse so gedreht werden, dass das Display von einem Benutzer leicht zugänglich ist.

Die vorstehend beschriebenen Merkmale der Ansprüche sowie die nachstehend in der Beschreibung angegebenen Ausführungsbeispiele, Merkmale und konstruktive Besonderheiten in den Ansprüchen sind im Rahmen der Erfindung untereinander frei kombinierbar.

Weitere Merkmale der Erfindung ergeben sich aus den weiteren Ansprüchen, der Beschreibung und der Zeichnung, in der Ausführungsbeispiele der Erfindung wiedergegeben und nachfolgend im Einzelnen beschrieben sind. Es zeigen:
- Fig. 1: eine Ansicht auf das Gehäuse der Messanordnung in Blickrichtung auf das Display,
- Fig. 2: einen Schnitt durch das Gehäuse der Messanordnung längs der Linie II-II in Fig. 1,
- Fig. 3: eine Seitenansicht auf das Gehäuse der Messanordnung nach Fig. 1,
- Fig. 4: einen Querschnitt durch das Gehäuse der Messanordnung längs der Linie IV-IV in Fig. 3,
- Fig. 5: eine schematische Darstellung eines Rohres beliebiger Länge als Ausgangsmaterial für das Gehäuse der Messanordnung nach Fig. 1,
- Fig. 5a: ein erstes Ausführungsbeispiel des Querschnitts des Rohres nach Fig. 5,
- Fig. 5b: ein zweites Ausführungsbeispiel des Querschnitts des Rohres nach Fig. 5,
- Fig. 5c: ein drittes Ausführungsbeispiel des Querschnitts des Rohres nach Fig. 5,
- Fig. 6: eine schematische Ansicht eines von einem Rohr nach Fig. 5 abgelängten Rohrabschnitt als Gehäuse der Messanordnung nach Fig. 2,
- Fig. 7: einen Längsschnitt längs der Linie VII-VII durch den bearbeiteten Rohrabschnitt nach Fig. 6,
- Fig. 8: einen Querschnitt längs der Linie VIII-VIII durch den Rohrabschnitt nach Fig. 6.

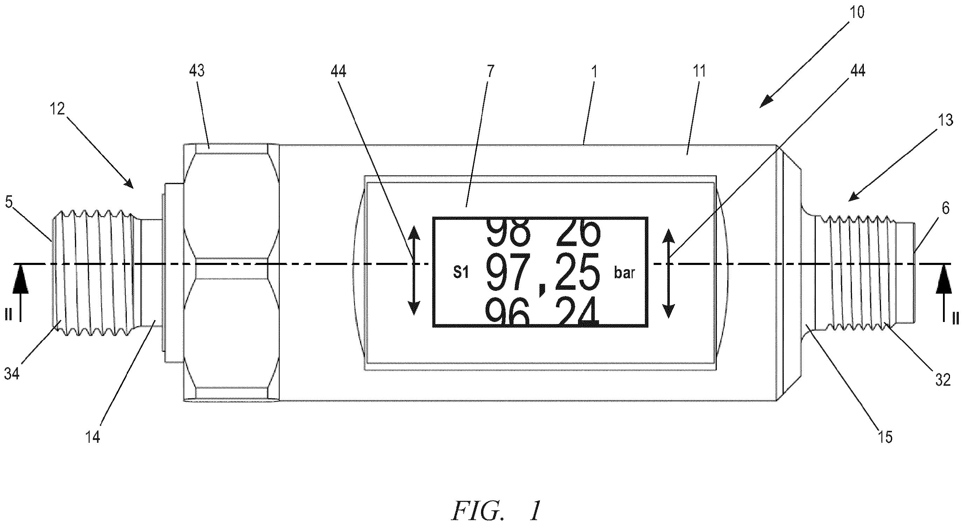

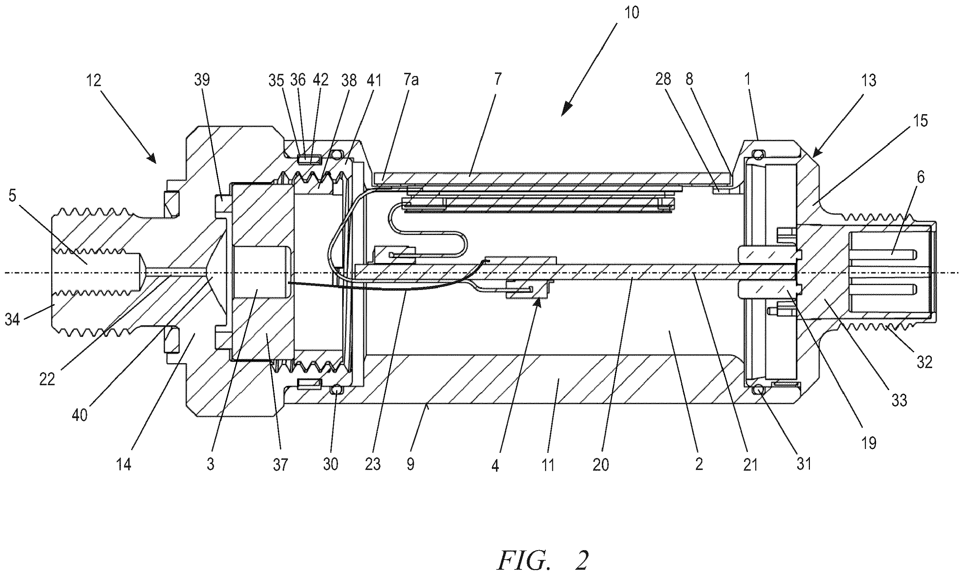

Die in Figur 1 dargestellte Messanordnung 10 weist ein Gehäuse 1 auf, in welchem ein Gehäuseinnenraum 2 (Fig. 2) ausgebildet ist. In diesem Gehäuseinnenraum 2 ist eine Platine 20 gehalten, die als Träger für eine Sensorelektronik 4 dient. Die Sensorelektronik 4 ist über eine Sensorleitung 23 mit einem im Gehäuseinnenraum 2 angeordneten Sensor 3 verbunden, der als Drucksensor, Temperatursensor, Flüssigkeitssensor oder dergleichen Sensor ausgebildet sein kann.

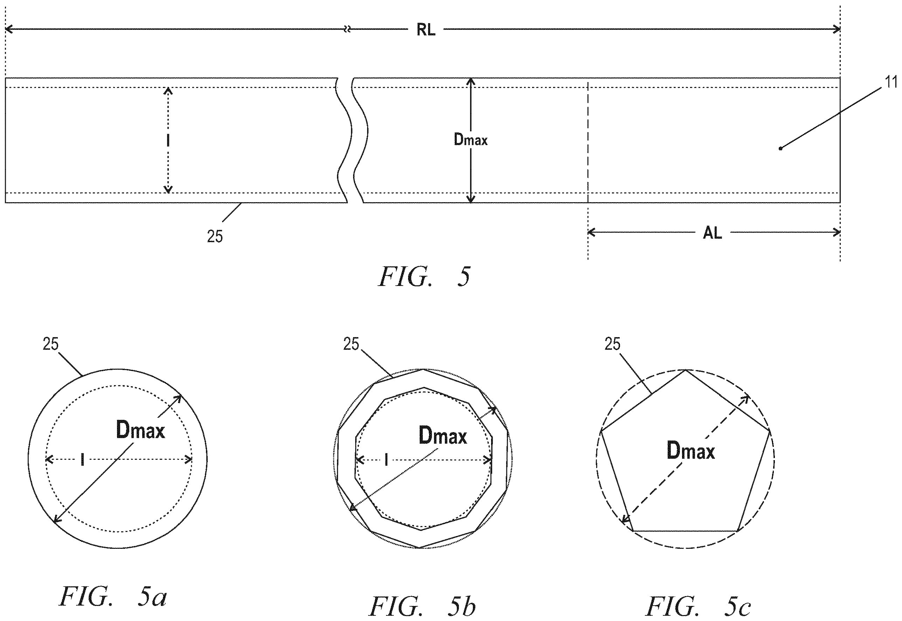

Das Gehäuse 1 besteht aus einem Rohrabschnitt 11. Der Rohrabschnitt 11 kann von einem Rohr 25 (Fig. 5) beliebiger Länge RL abgetrennt werden. Der Rohrabschnitt 11 hat eine axiale Länge AL. Der Rohrabschnitt 11 ist ein von dem Rohr 25 in einer vorgegebenen Länge AL abgelängter Rohrabschnitt 11. Das Rohr 25 kann aus Stahl, Aluminium, Metalllegierungen, Kunststoff, oder dergleichen Materialien bestehen. Das Rohr 25 kann ein nach beliebigen Verfahren hergestelltes Rohr sein, zum Beispiel ein gewalztes, ein gezogenes oder ein geschweißtes Rohr.

Das zu mehreren Rohrabschnitten 11 zugeschnittene Rohr 25 hat einen maximalen Außendurchmesser Dₘₐₓ. Vorteilhaft hat das Rohr 25 kreisrunden Querschnitt, wie in Fig. 5a beispielhaft wiedergegeben ist. Auch andere Querschnitte des Rohres 25 und damit des Rohrabschnittes 11 sind vorteilhaft. Auch ein mehreckiger Querschnitt, insbesondere ein polygonaler Querschnitt gemäß Fig. 5b kann zweckmäßig sein. Auch ein polygonaler Querschnitt weist einen maximalen Außendurchmesser Dₘₐₓ auf, auf dem die Ecken des polygonalen Querschnitts liegen. Bevorzugt ist der polygonale Querschnitt als regelmäßiges Polygon ausgebildet. Im Ausführungsbeispiel weist der polygonale Querschnitt nach Fig. 5b zehn Ecken auf. Es sind auch Ausbildungen mit mehr oder weniger Ecken möglich, zum Beispiel ein polygonaler Querschnitt mit fünf Ecken, wie er in Fig. 5c beispielhaft wiedergegeben ist. Grundsätzlich sind auch kreisähnliche Querschnitte möglich. Bevorzugt sind Querschnitte vorgesehen, denen ein maximaler Außendurchmesser Dₘₐₓ zugeordnet werden kann.

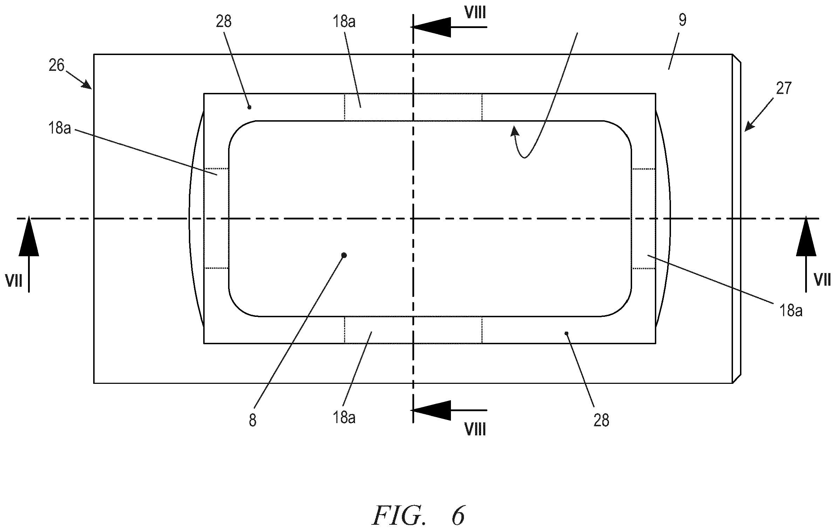

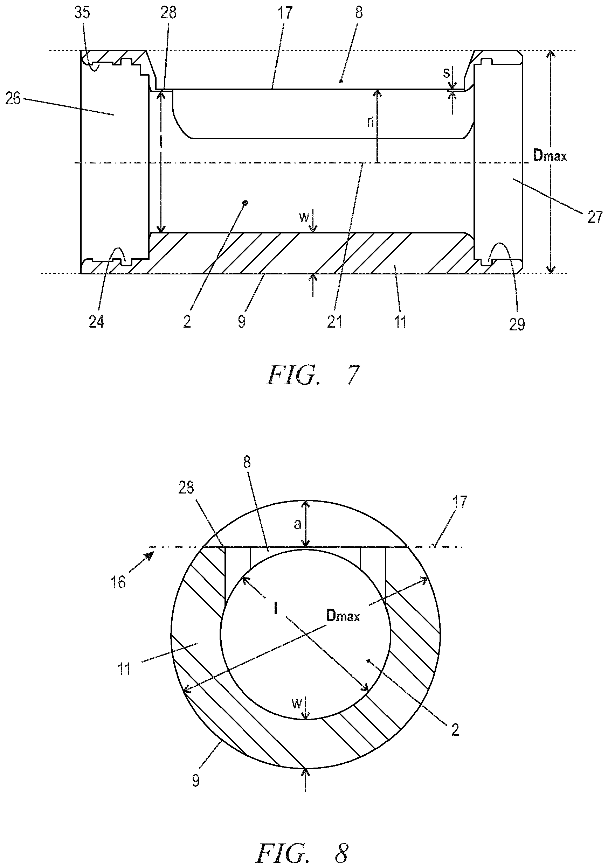

Der von einem Rohr 25 abgelängte Rohrabschnitt 11 wird zur Ausbildung des Gehäuses 1 der Messanordnung 10 weiter bearbeitet. In der Rohrwandung 9 ist für die Anordnung eines Displays 7 (Fig. 2) eine Aufnahme 8 eingebracht, wie in Fig. 6 dargestellt. Wie sich in Verbindung mit dem in Fig. 7 dargestellten Längsschnitt längs der Linie VII-VII in Fig. 6 ergibt, ist die Aufnahme 8 zum Gehäuseinnenraum 2 offen. Die Aufnahme 8 weist einen Innenumfang 18 auf, der zumindest über Teilabschnitte 18a mit einem Auflagerand 28 ausgebildet ist. Bevorzugt ist der Auflagerand 28 über den gesamten Innenumfang 18 durchgehend ausgebildet. Der Auflagerand 28 erstreckt sich somit lückenlos über den gesamten Innenumfang 18 der Aufnahme 8.

Wie sich insbesondere aus Fig. 7 ergibt, ragen die Teilabschnitte des Auflagerandes 28 oder ein ununterbrochen ausgebildeter, insbesondere lückenloser Auflagerand 28 in die Aufnahme 8 ein. Die Teilabschnitte des Auflagerandes 28 oder ein über den Innenumfang 18 durchgehender Auflagerand 28 liegen in einer gemeinsamen Ebene 17. Die Ebene 17 des Auflagerandes 28 liegt, wie Fig. 7 zeigt, parallel zur Längsmittelachse 21 des Rohrabschnitts 11. Wie Fig. 7 zeigt, liegt die Ebene 17 auf der Höhe der Längsmittelachse 21 mit einem lotrechten Abstand rᵢ zur Längsmittelachse 21. Die Dicke w der Rohrwandung 9 ist lotrecht zur Ebene 17 auf der Höhe der Längsmittelachse 21 bis auf die Dicke s des Auflagerandes 28 abgetragen. Daraus ergibt sich: Lotrechter Abstand r₁ minus der Dicke s des Auflagerandes 28 entspricht dem Innenradius I des Rohrabschnittes 11. Vorteilhaft steht der Außendurchmesser Dₘₐₓ des Rohrabschnittes 11 in einem Verhältnis V zum Innendurchmesser I des Rohrabschnittes 11 von 1,3 bis 3, insbesondere von 1,5 bis 1,7, vorzugsweise von 1,6.

Wie sich ferner aus der Darstellung des Querschnitts nach Fig. 8 ergibt, bildet die Ebene 17 des Auflagerandes 28 eine Sekante 16 zu dem maximalen Außendurchmesser Dₘₐₓ des Rohrabschnittes 11. Die Ausbildung ist so getroffen, dass die Aufnahme 8 und der Auflagerand 28 innerhalb des maximalen Außendurchmessers Dₘₐₓ des Rohrabschnittes 11 liegen. Die Ebene 17 liegt mit einem maximalen lotrechten Abstand a zum maximalen Außendurchmesser Dₘₐₓ der Rohrabschnittes 11. Der maximale Abstand a liegt in einem Bereich zwischen 30% bis 99,9% der Dicke w der Rohrwandung 9. Vorteilhaft beträgt der maximale Abstand a 98% bis 99,9%, insbesondere 99% der Dicke w der Rohrwandung 9.

Die offenen Enden 26 und 27 des Rohrabschnittes 11 sind mit je einer innen liegenden Ringnut 24 bzw. 29 versehen. Die Ringnut 24 bzw. 29 ist zur Aufnahme eines Dichtungsringes 30 bzw. 31 vorgesehen, wie in Fig. 2 dargestellt. Die Dichtungsringe 30 bzw. 31 sind bevorzugt O-Dichtungsringe.

Im offenen Ende 26 des Rohrabschnitts 11 ist eine weitere, umlaufende Verriegelungsnut 35 vorgesehen, die der Aufnahme eines Verriegelungsringes 36 (Fig. 2) dient.

Das aus dem Rohrabschnitt 11 gebildete Gehäuse 1 der dargestellten Messanordnung 10 weist ausweislich Fig. 2 einen Messeingang 5 und einen Signalausgang 6 auf. Der Messeingang 5 und/oder der Signalausgang 6 kann auf einer Stirnseite 12 oder 13 des Rohrabschnittes 11 angeordnet sein. Im gezeigten Ausführungsbeispiel ist der Messeingang 5 auf der einen Stirnseite 12 des Rohrabschnitts 11 und der Signalausgang 6 auf der anderen Stirnseite 13 des Rohrabschnitts 11 vorgesehen. Bevorzugt ist eine Ausbildung vorgesehen, bei der der Messeingang 5 und/oder der Signalausgang 6 in einem das offene Ende 26 bzw. 27 des Rohrabschnitts 11 verschließenden Verschlussstopfen 14 bzw. 15 ausgebildet ist.

In Fig. 2 ist der Verschlussstopfen 15 dargestellt, der auf der Stirnseite 13 des Gehäuses 1 das offene Ende 27 des Rohrabschnittes 11 verschließt. Der Verschlussstopfen 15 ist nach dem Einlegen eines Dichtungsrings 31 in das offene Ende 27 eingesetzt und wird im Rohrabschnitt 11 fixiert. Hierzu kann eine Presspassung, ein Verkleben, ein Verschweißen oder dergleichen Befestigung vorgesehen sein. Auch kann ein Einschrauben in das offene Ende 27 zweckmäßig sein, zum Beispiel durch ein geschnittenes Gewinde oder aber durch ein selbstschneidendes Gewinde. Der Verschlussstopfen 15 ist im Rohrabschnitt 11 bevorzugt drehfest gehalten. Der eingelegte Dichtungsring 31 stellt einen staub- und flüssigkeitsdichten Verschluss des offenen Endes 27 des Rohrabschnittes 11 sicher

Der Verschlussstopfen 15 ist mit einem insbesondere zentral angebrachten Steckanschluss 33 ausgebildet. Der Steckanschluss 33 kann in Form einer Buchse oder eines Steckers ausgebildet sein. Der Steckanschluss 33 ragt in einen Hülsenansatz 32 des Verschlussstopfens 15 ein, der ein Außengewinde zum Aufschrauben eines Sicherungsrings eines Anschlusssteckers dient.

Der Steckanschluss 33 kann auf der Platine 20 der Sensorelektronik 4 festgelegt sein, wobei die elektrischen Verbindungen der Steckkontakte unmittelbar auf der Platine 20 hergestellt sind. Durch die Aufnahme des Steckanschlusses 33 in dem Hülsenansatz 32 des Verschlussstopfens 15 kann der Verschlussstopfen 15 zugleich als Halter 19 der Platine 20 der Sensorelektronik 4 dienen. Zweckmäßig sind im Gehäuseinnenraum 2 nicht näher dargestellte Trägerstrukturen für die Platine 20 vorgesehen. Mittels derartiger Trägerstrukturen kann die Platine 20 der Sensorelektronik vibrationsfest im Gehäuse 1 gehalten werden.

Das offene Ende 26 des Rohrabschnittes 11 wird auf der Stirnseite 12 des Gehäuses 1 durch einen Verschlussstopfen 14 verschlossen. Der Verschlussstopfen 14 weist einen zentralen Fortsatz 34 auf, in dem der Messeingang 5 ausgebildet ist. Der Messeingang 5 kann vorteilhaft als fluider Messeingang 5 zum Anschluss an die Rohrleitung eines Fluides ausgebildet sein. Das Fluid kann ein gasförmiges oder flüssiges Fluid sein. Andere Ausbildungen des Messeingangs 5 wie zum Beispiel als Temperatursensor, Feuchtigkeitssensor oder dergleichen Sensor können vorteilhaft sein.

Der Messeingang 5 ist im gezeigten Ausführungsbeispiel für ein Fluid ausgebildet. Über einen Fluidkanal 22 ist der Messeingang 5 mit einer Messkammer 40 verbunden, welche von einem Träger 37 für einen Sensor 3 verschlossen ist. Der Träger 37 ist in den Verschlussstopfen 14 eingesetzt und wird über einen Gewindering 38 im Verschlussstopfen 14 festgehalten. Zur Herstellung der Dichtigkeit der Messkammer 40 ist ein Dichtungsring 39 vorgesehen. Der Dichtungsring 39 ist zwischen dem Boden des Verschlussstopfens 14 und dem Träger 37 für den Sensor 3 angeordnet. Durch festes Anziehen des Gewinderings 38 wird der Träger 37 an den Dichtungsring 39 angedrückt und die Dichtigkeit der Messkammer 40 hergestellt.

Der Verschlussstopfen 14 wird mit dem im Verschlussstopfen 14 montierten Sensor 3 in das offene Ende 26 des Rohrabschnittes 11 axial eingeschoben, wobei der in die Ringnut 24 eingesetzte Dichtungsring 30 einen staub- und flüssigkeitsdichten Verschluss des offenen Endes 26 des Rohrabschnittes 11 gewährleistet.

Der Verschlussstopfen 14 weist im Außenumfang seines Einschubabschnittes 41 eine Verriegelungsnut 42 auf, die mit der Verriegelungsnut 35 im offenen Ende 26 des Rohrabschnittes 11 einen Aufnahmeraum für einen Verriegelungsring 36 bildet. Beim axialen Einschieben des Einschubabschnitts 41 des Verschlussstopfens 14 in das offene Ende 26 des Rohrabschnitts 11 wird der in der Verriegelungsnut 35 des offenen Ende 26 liegende Verriegelungsring 36 ausgeweitet bis die Verriegelungsnut 42 im Einschubabschnitt 41 in Deckung mit der Verriegelungsnut 35 im offenen Ende 26 des Rohrabschnitts 11 gelangt. Der Verriegelungsring 36 schnappt in die Verriegelungsnut 42 des Einschubabschnitts 41 ein, so dass mittels des Verriegelungsrings 36 der dicht im offenen Ende 26 des Rohrabschnittes 11 eingesetzte Verschlussstopfen 14 axial gesichert ist. Der in dem offenen Ende 26 des Rohrabschnitts 11 gehaltene Verschlussstopfen 14 ist um die Längsmittelachse 21 des Rohrabschnittes 11 drehbar, so dass eine leichte Schraubmontage der Messanordnung 10 selbst an einen Rohranschluss eines Fluids möglich ist. Zweckmäßig ist hierzu der Außenumfang des Verschlussstopfens 14 mit der Kontur 43 einer Mutter zum Angriff eines Maulschlüssels ausgebildet. Unabhängig von der Anzahl der Montageumdrehungen des Messanschlusses an einen Rohranschluss kann das Gehäuse 1 derart gedreht werden, dass das Display 7 jederzeit in eine zum Ablesen vorteilhafte Drehlage gebracht werden kann.

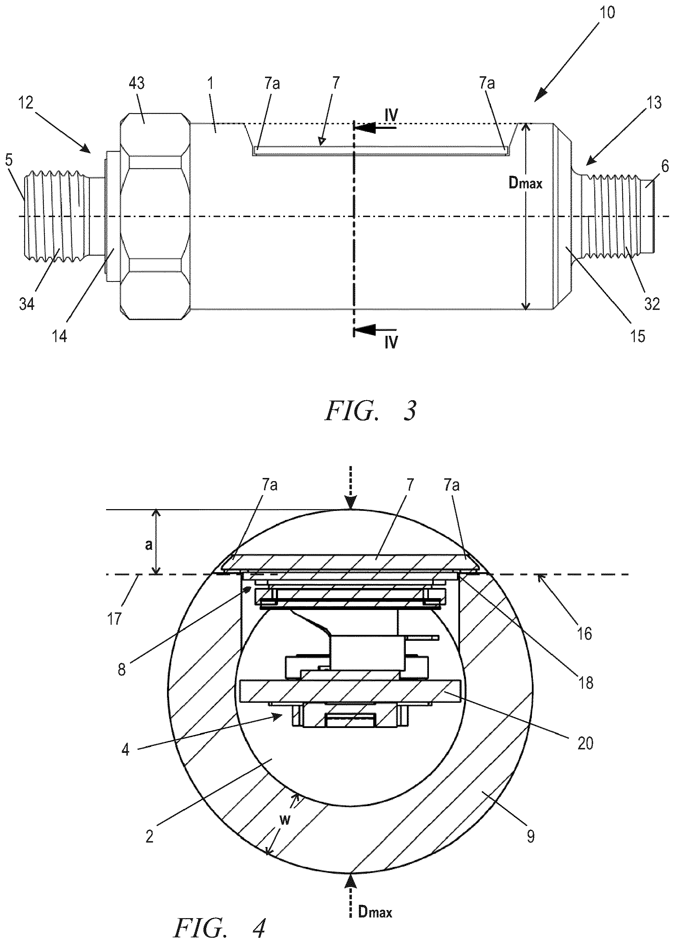

Wie insbesondere die Fig. 2 und 4 zeigen, liegt das Display 7 mit seinem Rand 7a auf dem Auflagerand 28 der Aufnahme 8 auf. Der Rand 7a des Displays 7 ist auf dem Auflagerand 28 der Aufnahme 8 verklebt gehalten. Insbesondere ist das Display 7 auf dem Auflagerand 28 staub-und flüssigkeitsdicht verklebt.

Wie Fig. 4 zeigt, liegt das Display 7 innerhalb des maximalen Außendurchmessers Dₘₐₓ des Rohrabschnitts. Dadurch ist das Display gegen äußere mechanische Einflüsse geschützt.

Wie die Fig. 2 und 4 zeigen, ist die Sensorelektronik 4 mit dem Display 7 verbunden. Das Display 7 ist als Ausgabeeinheit und/oder als Eingabeeinheit, insbesondere als Touch-Display 7, ausgebildet. Hervorzuheben ist die Ausbildung des Displays 7 als Eingabeeinheit in Form eines sogenannten Scroll-Rades. Wie in Fig. 1 dargestellt, kann zum Beispiel ein Schaltpunkt S1 der Sensorelektronik 4 mittels Wischen in Richtung der Doppelpfeile 44 sowohl für die Stellen vor dem Komma als auch für die Stellen nach dem Komma im Scroll-Modus eingestellt werden. Dadurch sind Stellräder, Tasten oder dergleichen Eingabeelemente entbehrlich.

Wird im gezeigten Ausführungsbeispiel ein Druck erreicht, der dem eingestellten Schaltpunkt S1 für Druck entspricht, gibt die Sensorelektronik 4 ein Signal über den Signalausgang 6 ab. Über die Scrollfunktion können die eingestellten Druckparameter ohne großen Aufwand am Touch-Display 7 verändert und angepasst werden.

Die Messanordnung 10 ist im Ausführungsbeispiel zum Messen von Druck in einem Fluid bzw. einer Rohranordnung ausgebildet. Die Messanordnung 10 kann auch zum Messen von Temperaturen, Feuchtigkeit oder dergleichen Parameter eingesetzt werden.

## Patentansprüche

1. Messanordnung mit einem Gehäuse (1) und einem Gehäuseinnenraum (2),
- mit zumindest einem im Gehäuseinnenraum (2) angeordneten Sensor (3),
- sowie einer im Gehäuseinnenraum (2) angeordneten Sensorelektronik (4),
- wobei das Gehäuse (1) einen Messeingang (5) und einen Signalausgang (6) aufweist,
- und mit einem am Gehäuse (1) gehaltenen Display (7),
- wobei das Gehäuse (1) aus einem Rohrabschnitt (11) mit einer Längsmittelachse (21) und einem maximalen Außendurchmesser (Dₘₐₓ), gebildet ist,
- und die offenen Enden (26, 27) des Rohrabschnittes (11) durch je einen Verschlussstopfen (14, 15) verschlossen sind,
- und in der Rohrwandung (9) des Rohrabschnittes (11) eine zum Gehäuseinnenraum (2) offene Aufnahme (8) für das Display (7) eingebracht ist,
- **dadurch gekennzeichnet,**
- und dass die Aufnahme (8) über ihren Innenumfang (18) zumindest teilweise mit einem Auflagerand (28) ausgebildet ist,
- dass der Auflagerand (28) in die Aufnahme (8) einragt,
- und dass der Auflagerand (28) eine Auflage für das Display (7) bildet,
- wobei das Display (7) ein Touch Display ist,
- und das Display (7) als Scrollrad zur Einstellung von Schaltparametern der Messanordnung (10) ausgebildet ist.

2. Messanordnung nach Anspruch 1,
**dadurch gekennzeichnet, dass** der Auflagerand (28) des Rohrabschnittes (11) in einer Ebene (17) liegt, und dass die Ebene (17) parallel zur Längsmittelachse (21) des Rohrabschnittes (11) ausgerichtet liegt.

3. Messanordnung nach Anspruch 2,
**dadurch gekennzeichnet, dass** die durch den Auflagerand (28) bestimmte Ebene (17) im Querschnitt des Rohrabschnittes (11) eine Sekante (16) zu dem maximalen Außendurchmesser (Dₘₐₓ) des Rohrabschnittes (11) bildet.

4. Messanordnung nach einem der Ansprüche 1 bis 3,
**dadurch gekennzeichnet, dass** das Display (7) innerhalb des maximalen Außendurchmessers (Dₘₐₓ) des Rohrabschnittes (11) liegt.

5. Messanordnung nach einem der Ansprüche 1 bis 4,
**dadurch gekennzeichnet, dass** sich der Auflagerand (28) über den gesamten Innenumfang (18) der Ausnehmung (8) erstreckt.

6. Messanordnung nach einem der Ansprüche 1 bis 5,
**dadurch gekennzeichnet, dass** das Display (7) auf dem Auflagerand (28) der Aufnahme (8) staub- und flüssigkeitsdicht verklebt ist.

7. Messanordnung nach einem der Ansprüche 1 bis 6,
**dadurch gekennzeichnet, dass** der Messeingang (5) auf der einen Stirnseite (12) des Rohrabschnittes (11) und der Signalausgang (6) auf der anderen Stirnseite (13) des Rohrabschnittes (11) angeordnet ist.

8. Messanordnung nach einem der Ansprüche 1 bis 7,
**dadurch gekennzeichnet, dass** der Messeingang (5) oder der Signalausgang (6) in dem das offene Ende (26, 27) des Rohrabschnittes (11) verschließenden Verschlussstopfen (14, 15) angeordnet ist.

9. Messanordnung nach Anspruch 8,
**dadurch gekennzeichnet, dass** der Verschlussstopfen (14) als Halter (19) für eine Platine (20) der Sensorelektronik (4) ausgebildet ist.

10. Messanordnung nach Anspruch 8,
**dadurch gekennzeichnet, dass** der Verschlussstopfen (15) als Träger für den Sensor (3) ausgebildet ist.

11. Messanordnung nach Anspruch 10,
**dadurch gekennzeichnet, dass** in dem Verschlussstopfen (15) eine Messkammer (40) ausgebildet ist, die über einen Fluidkanal (22) mit dem Messeingang (5) für ein Medium verbunden ist.

12. Messanordnung nach Anspruch 11,
**dadurch gekennzeichnet, dass** der Verschlussstopfen (15) im offenen Ende (26) des Rohrabschnittes (11) um die Längsmittelachse (21) des Rohrabschnittes (11) drehbar gehalten ist.

## Claims

1. Measuring assembly with a housing (1) and a housing interior space (2),
- with at least one sensor (3) arranged in the housing interior space (2),
- and also sensor electronics (4) arranged in the housing interior space (2),
- wherein the housing (1) has a measuring input (5) and a signal output (6),
- and with a display (7) held on the housing (1),
- wherein the housing (1) is formed by a tube section (11) with a longitudinal centre axis (21) and a maximum outside diameter (Dₘₐₓ),
- and the open ends (26, 27) of the tube section (11) are each closed by a closure plug (14, 15),
- and a mount (8), which is open towards the housing interior space (2), for the display (7) is incorporated in the tube wall (9) of the tube section (11),
- **characterized**
- and in that the mount (8) is at least partially formed over its inner circumference (18) with a supporting border (28),
- in that the supporting border (28) protrudes into the mount (8),
- and in that the supporting border (28) forms a support for the display (7),
- wherein the display (7) is a touch display,
- and the display (7) is formed as a scroll wheel for setting switching parameters of the measuring assembly (10).

2. Measuring assembly according to Claim 1,
**characterized in that** the supporting border (28) of the tube section (11) lies in one plane (17), and **in that** the plane (17) is aligned parallel to the longitudinal centre axis (21) of the pipe section (11).

3. Measuring assembly according to Claim 2,
**characterized in that**, in the cross section of the tube section (11), the plane (17) determined by the supporting border (28) forms a secant (16) to the maximum outside diameter (Dₘₐₓ) of the pipe section (11).

4. Measuring assembly according to one of Claims 1 to 3,
**characterized in that** the display (7) lies within the maximum outside diameter (Dₘₐₓ) of the pipe section (11).

5. Measuring assembly according to one of Claims 1 to 4,
**characterized in that** the supporting border (28) extends over the entire inner circumference (18) of the recess (8).

6. Measuring assembly according to one of Claims 1 to 5,
**characterized in that** the display (7) is adhesively bonded on the supporting border (28) of the mount (8) in a dustproof and liquid-tight manner.

7. Measuring assembly according to one of Claims 1 to 6,
**characterized in that** the measuring input (5) is arranged on one end side (12) of the tube section (11) and the signal output (6) is arranged on the other end side (13) of the tube section (11).

8. Measuring assembly according to one of Claims 1 to 7,
**characterized in that** the measuring input (5) or the signal output (6) is arranged in the closure plug (14, 15) closing the open end (26, 27) of the pipe section (11).

9. Measuring assembly according to Claim 8,
**characterized in that** the closure plug (14) is formed as a holder (19) for a printed circuit board (20) of the sensor electronics (4).

10. Measuring assembly according to Claim 8,
**characterized in that** the closure plug (15) is formed as a carrier for the sensor (3).

11. Measuring assembly according to Claim 10,
**characterized in that** formed in the closure plug (15) is a measuring chamber (40), which is connected by way of a fluid channel (22) to the measuring input (5) for a medium.

12. Measuring assembly according to Claim 11,
**characterized in that** the closure plug (15) is held rotatably about the longitudinal centre axis (21) of the tube section (11) in the open end (26) of the tube section (11).

## Revendications

1. Arrangement de mesure comprenant un boîtier (1) et un espace intérieur de boîtier (2),
- comprenant au moins un capteur (3) disposé dans l'espace intérieur de boîtier (2),
- ainsi qu'une électronique de capteur (4) disposée dans l'espace intérieur de boîtier (2),
- le boîtier (1) possédant une entrée de mesure (5) et une sortie de signal (6),
- et comprenant un écran d'affichage (7) maintenu au niveau du boîtier (1),
- le boîtier (1) étant formé d'une portion tubulaire (11) ayant un axe central longitudinal (21) et un diamètre extérieur maximal (Dₘₐₓ),
- et les extrémités (26, 27) ouvertes de la portion tubulaire (11) étant respectivement fermées par un bouchon de fermeture (14, 15),
- et un logement (8) pour l'écran d'affichage (7), ouvert vers l'espace intérieur de boîtier (2), étant ménagé dans la paroi de tube (9) de la portion tubulaire (11),
- **caractérisé**
- et en ce que le logement (8) est configuré au moins partiellement avec un bord d'appui (28) sur son pourtour intérieur (18),
- en ce que le bord d'appui (28) fait saillie dans le logement (8)
- et en ce que le bord d'appui (28) forme un appui pour l'écran d'affichage (7),
- l'écran d'affichage (7) étant un écran tactile,
- et l'écran d'affichage (7) étant réalisé sous la forme d'une roulette de défilement pour le réglage de paramètres de commutation de l'arrangement de mesure (10).

2. Arrangement de mesure selon la revendication 1,
**caractérisé en ce que** le bord d'appui (28) de la portion tubulaire (11) se trouve dans un plan (17) et **en ce que** le plan (17) est orienté parallèlement à l'axe central longitudinal (21) de la portion tubulaire (11).

3. Arrangement de mesure selon la revendication 2,
**caractérisé en ce que** le plan (17) déterminé par le bord d'appui (28) forme, en coupe transversale de la portion tubulaire (11), une sécante (16) au diamètre extérieur maximal (Dₘₐₓ) de la portion tubulaire (11).

4. Arrangement de mesure selon l'une des revendications 1 à 3,
**caractérisé en ce que** l'écran d'affichage (7) se trouve à l'intérieur du diamètre extérieur maximal (Dₘₐₓ) de la portion tubulaire (11).

5. Arrangement de mesure selon l'une des revendications 1 à 4,
**caractérisé en ce que** le bord d'appui (28) s'étend sur la totalité du pourtour intérieur (18) du creux (8).

6. Arrangement de mesure selon l'une des revendications 1 à 5,
**caractérisé en ce que** l'écran d'affichage (7) est collé sur le bord d'appui (28) du logement (8) de manière étanche à la poussière et aux liquides.

7. Arrangement de mesure selon l'une des revendications 1 à 6,
**caractérisé en ce que** l'entrée de mesure (5) est disposée sur un côté frontal (12) de la portion tubulaire (11) et la sortie de signal (6) sur l'autre côté frontal (3) de la portion tubulaire (11).

8. Arrangement de mesure selon l'une des revendications 1 à 7,
**caractérisé en ce que** l'entrée de mesure (5) ou la sortie de signal (6) est disposée dans le bouchon de fermeture (14, 15) qui ferme l'extrémité (26, 27) ouverte de la portion tubulaire (11).

9. Arrangement de mesure selon la revendication 8,
**caractérisé en ce que** le bouchon de fermeture (14) est réalisé sous la forme d'un élément de maintien (19) pour une platine (20) de l'électronique de capteur (4).

10. Arrangement de mesure selon la revendication 8,
**caractérisé en ce que** le bouchon de fermeture (15) est réalisé sous la forme d'un élément porteur pour le capteur (3).

11. Arrangement de mesure selon la revendication 10,
**caractérisé en ce qu'**une chambre de mesure est formée dans le bouchon de fermeture (15), laquelle est reliée à l'entrée de mesure (5) par le biais d'un canal à fluide (22) pour un fluide.

12. Arrangement de mesure selon la revendication 10,
**caractérisé en ce que** le bouchon de fermeture (15) est maintenu dans l'extrémité (26) ouverte de la portion tubulaire (11) de manière rotative autour de l'axe central longitudinal (21) de la portion tubulaire (11).
